# EUROPEAN PATENT APPLICATION

(11) **EP 4 596 853 A1**
(43) Date of publication of application: **06.08.2025**
(21) Application number: 23871493.5
(22) Date of filing: 08.08.2023
(51) Int. Cl.: F01N 3/28, B01J 33/00

(54) **MAT MATERIAL, EXHAUST GAS PURIFICATION DEVICE, AND METHOD FOR MANUFACTURING MAT MATERIAL**

(30) Priority: 26.09.2022 JP 2022152537; 26.09.2022 JP 2022152538
(71) Applicant: IBIDEN CO., LTD., Ogaki-shi, Gifu 503-8604 (JP)
(72) Inventor: MATSUNAGA, Maki, Takahama-shi, Aichi 444-1301 (JP); KOGO, Yuta, Takahama-shi, Aichi 444-1301 (JP)
(74) Representative: Winter, Brandl - Partnerschaft mbB
(86) International application number: PCT/JP2023/028877
(87) International publication number: WO 2024/070251

(57) **Abstract**

A mat material including: a base mat containing inorganic fibers and including a first main surface and a second main surface; and a network on at least one of the first or second main surface, the network containing multiple bases made of an organic substance and fibers stretching in at least two directions from each of the multiple bases.

## Description

### TECHNICAL FIELD

The present disclosure relates to a mat material, an exhaust gas conversion apparatus, and a method for producing a mat material.

### BACKGROUND ART

Exhaust gas discharged from an internal combustion engine such as a diesel engine contains a particulate matter (hereinafter, also referred to as "PM"). Adverse effects of PM on the environment and human bodies have been problems. The exhaust gas also contains harmful gas components such as CO, HC, and NOx. This causes concerns about the effects of such harmful gas components on the environment and human bodies.

In view of the above, various exhaust gas conversion apparatuses that collect PM in exhaust gas and convert harmful gas components have been proposed. Such an exhaust gas conversion apparatus includes an exhaust gas treatment body including porous ceramics such as silicon carbide or cordierite, a casing (cylindrical member) for housing the exhaust gas treatment body, and a holding sealing material between the exhaust gas treatment body and the casing. The holding sealing material is disposed mainly for purposes such as preventing the exhaust gas treatment body from being damaged by contact with the casing that covers the periphery of the exhaust gas treatment body due to vibrations and impacts from operation of automobiles or the like and preventing exhaust gas leakage from a space between the exhaust gas treatment body and the casing.

The holding sealing material for use in such applications includes a mat material containing inorganic fibers. The mat material containing inorganic fibers is also used for applications such as insulation and soundproofing by being wrapped around pipes of automobiles and the like.

Patent Literature 1 discloses a holding sealing material including a sheet material on at least one of a first or second main surface of a base member, wherein the sheet material has an opening in at least a portion of its surface. Patent Literature 1 also discloses thermocompression bonding of the sheet material formed from a heat-fusible material with the base material to fix the sheet material to the main surface(s) of the base material without using an adhesive.

### CITATION LIST

### - Patent Literature

Patent Literature 1: JP 2009-85092 A

### SUMMARY OF INVENTION

### - Technical Problem

In Patent Literature 1, the sheet material is provided to prevent scattering of inorganic fibers contained in the base material.

One conventional method for producing such a mat material is a punching method (also referred to as punching) using a punching die having a punching blade.

In this method, a large laminated body is prepared in which a sheet-shaped member containing inorganic fibers and a flexible sheet are bonded together, and the laminated body is punched, whereby many mat materials can be obtained by one-time punching.

The mat material has a long-side direction which is a wrapping direction, and a short-side direction which is perpendicular to the long-side direction.

When obtaining such mat materials from a single large laminated body, the following punching positions are combined in order to obtain as many mat materials as possible from the single large laminated body: a punching position where a mat material is punched out in a direction in which the longitudinal direction of the laminated body is the long-side direction of the mat material; and a punching position where a mat material is punched out in a direction in which the transverse direction of the laminated body is the long-side direction of the mat material.

In this case, two types of mat materials, which are different from each other in the relationship between the orientation of the long-side direction of the mat material and the longitudinal or transverse direction of the laminated body, are obtained.

In Patent Literature 1, the sheet material is thermocompression bonded and thus fixed to the base material. During this process, fibers forming the sheet material are melted, whereby the sheet material is attached to the base material. Thus, presumably, the fibers of the sheet material after thermocompression bonding have holes, resulting in poor fiber strength. In addition, presumably, fusion of multiple fibers of the sheet material to each other results in poor flexibility of the sheet material.
As a result, when a mat material provided with such a sheet material is wrapped around an exhaust gas treatment body, cracking may occur in the mat material.

The present disclosure was made in view of the above problems and aims to provide a mat material capable of preventing or reducing cracking at the time of wrapping.

### - Solution to Problem

A mat material according to a first embodiment of the present disclosure includes a base mat containing inorganic fibers and including a first main surface and a second main surface; and a network on at least one of the first or second main surface, the network containing multiple bases made of an organic substance and fibers stretching in at least two directions from each of the multiple bases.

The mat material according to the first embodiment of the present disclosure includes a network on at least one of the first or second main surface of the base mat, the network containing multiple bases made of an organic substance and fibers stretching in at least two directions from each of the multiple bases. Thus, the strength and flexibility of the mat material are high, which can prevent or reduce cracking in the mat material at the time of wrapping.

In the mat material according to the first embodiment of the present disclosure, preferably, a maximum width of each of the multiple bases is greater than a width of each of the fibers forming the network.

This enables more fibers forming the network to firmly join together, making it possible to further increase the strength of the entire mat material. This makes it possible to more effectively prevent or reduce cracking in the mat material at the time of wrapping.

In the mat material according to the first embodiment of the present disclosure, preferably, the fibers forming the network have a glass transition temperature higher than a glass transition temperature of the organic substance constituting the multiple bases.

This facilitates formation of the network using a hot melt powder.

In the mat material according to the first embodiment of the present disclosure, preferably, the network is three-dimensionally formed.

This can increase the strength of the network formed on at least one of the first or second main surface of the base mat and can also disperse stress applied to the network, making it possible to more effectively prevent or reduce cracking in the mat material at the time of wrapping.

In the mat material according to the first embodiment of the present disclosure, more preferably, the fibers forming the network include at least one of organic or inorganic fibers.

In view of more effectively preventing or reducing cracking in the mat material at the time of wrapping, more preferably, the fibers forming the network consist of organic fibers.

A mat material according to a second embodiment of the present disclosure includes a base mat containing inorganic fibers and including a first main surface and a second main surface; and a web on at least one of the first or second main surface, the web containing fiber bundles each formed from multiple fibers entangled together and single fibers.

In the mat material according to the second embodiment of the present disclosure, the web contains fiber bundles. The fiber bundles are each formed from multiple fibers entangled together. The web contains such fiber bundles and single fibers, which can prevent or reduce a decrease in strength and flexibility of the fibers forming the web. As a result, cracking in the mat material at the time of wrapping can be prevented or reduced.

In the mat material according to the second embodiment of the present disclosure, preferably, the fiber bundle includes multiple fiber bundles stretching in different stretching directions, and the web contains the multiple fiber bundles and the single fibers.

Thus, the mat material can contain similar numbers of longitudinally oriented fibers and transversely oriented fibers.

In the mat material according to the second embodiment of the present disclosure, preferably, at least one of the fiber bundles or the single fibers is curved.

This increases intersections of the fibers forming the web and can disperse stress applied to the web, making it possible to more effectively prevent or reduce cracking in the mat material at the time of wrapping.

In the mat material according to the second embodiment of the present disclosure, preferably, the web is three-dimensionally formed.

This can increase the strength of the web formed on at least one of the first or second main surface of the base mat and can also disperse stress applied to the web, making it possible to more effectively prevent or reduce cracking in the mat material at the time of wrapping.

In the mat material according to the second embodiment of the present disclosure, preferably, the fiber bundle includes at least one of organic or inorganic fibers, and the single fibers include at least one of organic or inorganic fibers.

In view of more effectively preventing or reducing cracking in the mat material at the time of wrapping, more preferably, the fiber bundle consists of organic fibers, and the single fibers consist of organic fibers.

An exhaust gas conversion apparatus of the present disclosure includes an exhaust gas treatment body through which exhaust gas passes; a holding sealing material that is used by being wrapped around an outer periphery of the exhaust gas treatment body; and a casing for housing the exhaust gas treatment body with the holding sealing material wrapped therearound, wherein the holding sealing material is the mat material according to the first or second embodiment of the present disclosure.

As described above, it is possible to prevent or reduce cracking in the mat materials according to the first and second embodiments of the present disclosure at the time of wrapping. Thus, the exhaust gas conversion apparatus of the present disclosure can prevent leakage of untreated exhaust gas from a crack in the mat material.

A method for producing a mat material of the present disclosure includes: a base mat preparing step of preparing a base mat containing inorganic fibers and including a first main surface and a second main surface; a sheet material preparing step of preparing a sheet material containing fibers stretching in at least two directions; a sheet material processing step of spraying a hot melt powder onto the sheet material and heating to allow the hot melt powder to adhere to the sheet material; and a sheet material attaching step of thermocompression bonding the sheet material with the hot melt powder adhered thereto to at least one of the first or second main surface of the base mat so as to attach the sheet material to the base mat.

In the method for producing a mat material of the present disclosure, a hot melt powder is sprayed onto a sheet material containing fibers stretching in at least two directions and heated to allow the hot melt powder to adhere to the sheet material, and the sheet material with the hot melt powder adhered thereto is thermocompression bonded to at least one of the first or second main surface of the base mat so that the sheet material is attached to the base mat. Thus, the sheet material can be attached to the base mat while the fibers forming the sheet material are prevented from being melted. This can prevent or reduce a decrease in strength and flexibility of the fibers forming the sheet material. In addition, a network having bases can be formed by heating and melting the hot melt powder. As a result, cracking in the mat material at the time of wrapping can be prevented or reduced.

### BRIEF DESCRIPTION OF DRAWINGS

FIG. 1 is a schematic perspective view of an example mat material according to the first embodiment of the present disclosure.
FIG. 2 is a schematic enlarged plan view of a network shown in FIG. 1.
FIG. 3 is a schematic perspective view of an example laminated body.
FIG. 4 is a schematic top view of an example step of obtaining two types of mat materials by punching.
FIG. 5 is a schematic perspective view of an example mat material according to the second embodiment of the present disclosure.
FIG. 6 is a schematic enlarged plan view of a web shown in FIG. 5.
FIG. 7 is a schematic perspective view of another example laminated body.
FIG. 8 is a schematic top view of another example step of obtaining two types of mat materials by punching.
FIG. 9 is a schematic cross-sectional view of an example exhaust gas conversion apparatus of the present disclosure.
FIG. 10 is a photo of a mat material of Comparative Example 1.

### DESCRIPTION OF EMBODIMENTS

Hereinafter, a mat material, an exhaust gas conversion apparatus, and a method for producing a mat material of the present disclosure are specifically described. The present disclosure is not limited to the following preferred embodiments, and may be suitably modified without departing from the gist of the present disclosure. Combinations of two or more preferred features described in the following preferred embodiments are also within the scope of the present disclosure.

A mat material according to a first embodiment of the present disclosure includes a base mat containing inorganic fibers and including a first main surface and a second main surface; and a network on at least one of the first or second main surface, the network containing multiple bases made of an organic substance and fibers stretching in at least two directions from each of the multiple bases.

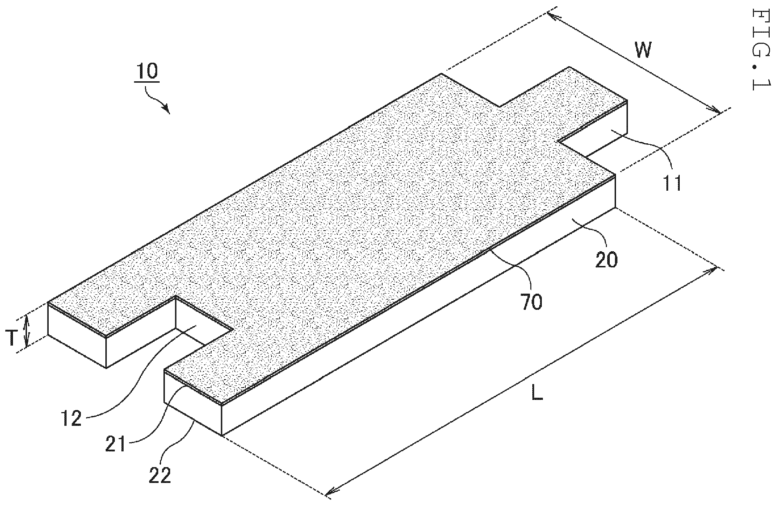

FIG. 1 is a schematic perspective view of an example mat material according to the first embodiment of the present disclosure.

A mat material 10 shown in FIG. 1 has a structure including a base mat 20 having a first main surface 21 and a second main surface 22 and a network 70 on the first main surface 21, the network 70 containing bases made of an organic substance and fibers (not shown in FIG. 1).

Out of two ends of the mat material 10 in a long-side direction (the direction indicated by the double-headed arrow L in FIG. 1), one end (a first end) has a projection 11 formed thereon, and the other end (a second end) has a recess 12 formed thereon.

The projection 11 is formed as a result of a projection on the base mat 20 being overlaid on a projection on the network 70. The recess 12 is formed as a result of a recess on the base mat 20 being overlaid on a recess on the network 70.

The projection and the recess of the mat material have shapes that perfectly fit each other when the mat material is wrapped around an exhaust gas conversion apparatus, an exhaust gas treatment body, or an exhaust pipe each having a cylindrical outer periphery.

The direction indicated by the double-headed arrow W in FIG. 1 is a short-side direction of the mat material, and the direction indicated by the double-headed arrow T is a thickness direction of the mat material.

FIG. 1 shows a case where the network 70 is formed on only the first main surface 21 of the base mat 20, but the network 70 may be formed on each of the first main surface 21 and the second main surface 22 of the base mat 20. The network 70 may also be formed on a side surface of the base mat 20, in addition to the first main surface 21 and/or the second main surface 22 of the base mat 20.

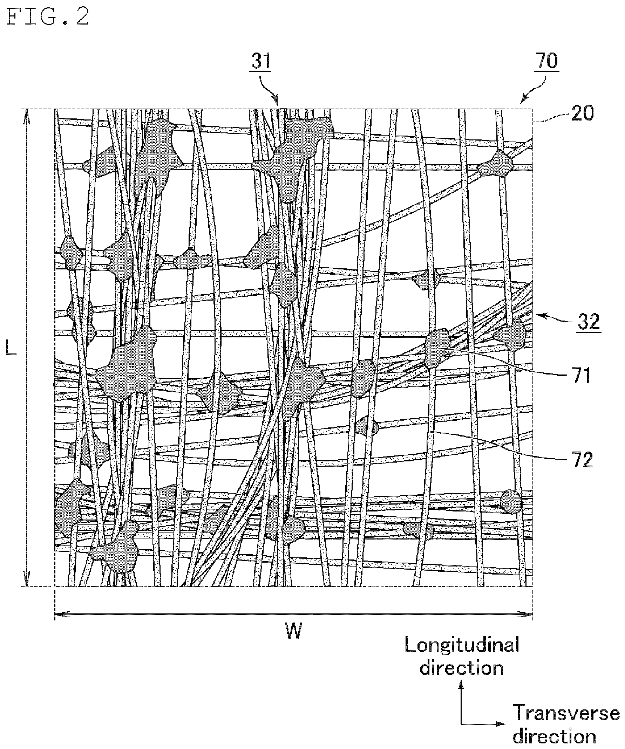

FIG. 2 is a schematic enlarged plan view of the network shown in FIG. 1.

In FIG. 2, the base mat 20 is shown by a dotted line in order to show the layout of the network 70 and the base mat 20.

As shown in FIG. 2, the network 70 contains multiple bases 71 made from an organic substance and fibers 72 stretching in two directions from each of the multiple bases 71.

The network 70 described above has a high strength and a high flexibility and thus can prevent or reduce cracking in the mat material 10 at the time of wrapping.

Here, the fibers 72 include fibers stretching in two directions, i.e., longitudinally oriented fibers 31 stretching in the longitudinal direction and transversely oriented fibers 32 stretching in the transverse direction.

The orientation direction of the longitudinally oriented fibers 31 is a longitudinal direction and is generally parallel to the long-side direction (the direction indicated by the double-headed arrow L in FIG. 1) of the mat material 10.

The orientation direction of the transversely oriented fibers 32 is a transverse direction and is generally parallel to the short-side direction (the direction indicated by the double-headed arrow W in FIG. 1) of the mat material 10.

Here, the direction aligned with a length direction of fibers constituting the longitudinally oriented fibers 31 is the orientation direction of the longitudinally oriented fibers 31, and the direction aligned with a length direction of fibers constituting the transversely oriented fibers 32 is the orientation direction of the transversely oriented fibers 32.

The longitudinally oriented fibers 31 in which the fibers are oriented (arranged) in the longitudinal direction and the transversely oriented fibers 32 in which the fibers are oriented (arranged) in the transverse direction are stacked, thus constituting a non-woven fabric with longitudinal and transverse fiber orientations.

This non-woven fabric made from the fibers 72 is produced by a production process in which fibers are directly spun from a raw material. The spun fibers are stretched in the longitudinal direction and the transverse direction, so that long filaments are oriented in the longitudinal direction and the transverse direction of the non-woven fabric.

The non-woven fabric made from the fibers 72 is a see-through non-woven fabric and includes openings surrounded by the longitudinally oriented fibers 31 and the transversely oriented fibers 32.

FIG. 2 shows a case where a single layer of the longitudinally oriented fibers 31 and a single layer of the transversely oriented fibers 32 are stacked. However, the number of layers of the longitudinally oriented fibers 31 and the number of layers of the transversely oriented fibers 32 to be stacked is not limited. A total of three or more layers of the longitudinally oriented fibers 31 and the transversely oriented fibers 32 may be alternately stacked.

The stacking order of the longitudinally oriented fibers 31 and the transversely oriented fibers 32 is also not limited.

Further, the network 70 may contain fibers stretching in three or more directions. For example, the network 70 may contain a diagonally extending fiber in addition to the longitudinally oriented fibers 31 and the transversely oriented fibers 32.

The relationship of the orientation direction of the longitudinally oriented fibers 31 and the transversely oriented fibers 32 with respect to the long-side direction and the short-side direction of the mat material 10 is not limited. Preferably, the orientation direction of one of the longitudinally oriented fibers 31 and the transversely oriented fibers 32 is parallel to the long-side direction of the mat material 10, and the orientation direction of the other one of the longitudinally oriented fibers 31 and the transversely oriented fibers 32 is parallel to the short-side direction of the mat material 10.

The bases 71 are distributed within the network 70. Unlike the one-dimensionally stretching fibers 72, each base 71 expands in the long-side direction, short-side direction, and thickness direction (in particular, the long-side direction and short-side direction) of the mat material 10. The bases 71 are fused to bond the fibers 72 stretching in different directions to each other. In other words, the bases 71 are disposed at regions where one or more longitudinally oriented fibers 31 and one or more transversely oriented fibers 32 intersect each other, and the bases 71 join these fibers together.

In order to firmly join more fibers 72 forming the network 70 to each other as described above, preferably, the maximum width of each base 71 is greater than the width of each fiber 72. This makes it possible to more effectively prevent or reduce cracking in the mat material 10 at the time of wrapping. For example, each base 71 may have a size that covers at least a portion of the region where multiple longitudinally oriented fibers 31 and multiple transversely oriented fibers 32 intersect each other. Yet, preferably, a single base 71 can cover multiple regions where one or more longitudinally oriented fibers 31 and one or more transversely oriented fibers 32 intersect.

Here, preferably, the maximum width of each base 71 and the width of each fiber 72 are compared in a plan view of the network 70.

Each base 71 also plays the role of fixing the network 70 to the base mat 20. In other words, the bases 71 are fused to bond the fibers 72 forming the network 70 to the base mat 20.

As described above, the network 70 is formed from a non-woven fabric in which the fibers 72 oriented in multiple directions (e.g., the longitudinally oriented fibers 31 and the transversely oriented fibers 32) are stacked, and the bases 71 distributed on the non-woven fabric and bonding the fibers 72 that are located at different layers and oriented in different directions to each other (e.g., the longitudinally oriented fibers 31 and the transversely oriented fibers 32 to each other).

As described above, the network 70 is three-dimensionally formed. In other words, the network 70 extends in the long-side direction and the short-side direction of the mat material 10 and has a thickness in the thickness direction of the mat material 10.

This further increases the strength of the network 70 and disperses stress applied to the network 70, which can more effectively prevent or reduce cracking in the mat material 10 at the time of wrapping.

FIG. 2 shows a case where the network 70 contains fiber bundles each formed from multiple fibers entangled together and single fibers, but the network 70 may include fiber bundles or single fibers.

Hereinafter, the details of these embodiments are described.

The base mat constituting the mat material according to the first embodiment of the present disclosure contains inorganic fibers. Any inorganic fibers, such as aluminasilica fibers, alumina fibers, or silica fibers, may be used. Glass fibers or biosoluble fibers may also be used. Fibers may be selected depending on properties required for the mat material, such as heat resistance and wind erosionresistance. Use of large-diameter fibers and long fibers compatible with country-specific environmental regulations is preferred.

Of these, low-crystalline alumina inorganic fibers are preferred, and low-crystalline alumina inorganic fibers having a mullite composition are more preferred. In addition, spinel-type compound-containing inorganic fibers are still more preferred.

The base mat has a long-side direction which is a wrapping direction, and a short-side direction perpendicular to the long-side direction.

Out of two ends of the base mat in the long-side direction, preferably, one end (a first end) has a projection formed thereon, and the other end (a second end) has a recess formed thereon. Preferably, the projection and the recess of the base mat have shapes that perfectly fit each other when the base mat is wrapped around an exhaust gas conversion apparatus, an exhaust gas treatment body, or an exhaust pipe each having a cylindrical periphery.

The base mat may have a shape without a projection and a recess.

Preferably, the base mat has a thickness of 2 to 30 mm.

A base mat having a thickness of less than 2 mm has poor thermal insulation and soundproofing properties because it is too thin. In contrast, a base mat having a thickness of more than 30 mm has poor flexibility and is poorly mounted on a member on which the base mat is to be mounted.

The bulk density of the base mat is not limited but is preferably 0.05 to 0.30 g/cm³.

When the base mat has a bulk density of less than 0.05 g/cm³, the inorganic fibers are loosely entangled and easily separated. This makes it difficult to maintain the shape of the base mat in a predetermined shape. The base mat having a bulk density of more than 0.30 g/cm³ is hard and poorly mounted on a member on which the base mat is to be mounted. Such a base mat is prone to cracking.

A network is formed on at least one of the first or second main surface of the base mat constituting the mat material according to the first embodiment of the present disclosure. The network contains multiple bases made of an organic substance and fibers stretching in at least two directions from each of the multiple bases.

The organic substance constituting the bases is different from the material of the fibers forming the network (hereinafter referred to as "network fibers"). Specifically, the bases are formed by heat fusion of a hot melt powder (hot melt adhesive) to the network fibers.

Thus, preferably, a glass transition temperature Tg1 of the network fibers is higher than a glass transition temperature Tg2 of the organic substance constituting the bases. This facilitates formation of the network containing the bases using a hot melt powder.

The glass transition temperature Tg1 of the network fibers is not limited, but is preferably -140°C or higher and 90°C or lower, more preferably -130°C or higher and 80°C or lower.

The glass transition temperature Tg2 of the organic substance constituting the bases is also not limited, but is preferably -140°C or higher and 90°C or lower, more preferably -130°C or higher and 80°C or lower.

Further, the difference between the glass transition temperature Tg1 of the network fibers and the glass transition temperature Tg2 of the organic substance constituting the bases, i.e., (Tg1 - Tg2), is also not limited. Yet, the difference is preferably 220°C or less, more preferably 200°C or less for integration of the network fibers with the bases.

The organic substance constituting the bases is not limited as long as it is can be used as a hot melt powder. Specific examples include polyethylene (PE), polyethylene terephthalate (PET), polyamide (PA), and ethylene-vinyl acetate copolymer resin (EVA).

Preferably, the network fibers are long filaments.

The long filaments preferably have a length longer than the usual length of staple fibers (e.g., 10 to 50 mm). The average filament length is preferably longer than 100 mm, more preferably several hundred millimeters or longer.

The long filaments may be long continuous fibers.

The average fiber diameter of main constituent filaments of the network fibers is usually 10 µm or less, preferably around 5 µm.

Preferably, the network has a planar shape that is substantially the same as that of the base mat. In other words, in a plan view, preferably, the region where the network is arranged substantially coincides with the region where the base mat is arranged.

Preferably, a sheet material including the network is formed, and the sheet material is attached to the base mat. Preferably, the sheet material is attached to the base mat via a hot melt powder.

The basis weight of the sheet material including the network is not limited, but is preferably 5 g/m² or more and 100 g/m² or less, more preferably 5 g/m² or more and 50 g/m² or less, still more preferably 5 g/m² or more and 30 g/m² or less.

The term "basis weight of the sheet material" herein refers to the basis weight per sheet material.

Preferably, the network fibers include at least one of organic or inorganic fibers.

For example, the longitudinally oriented fibers may include organic fibers and/or inorganic fibers, and the transversely oriented fibers may include organic fibers and/or inorganic fibers. The longitudinally oriented fibers and the transversely oriented fibers may be made of different materials. Yet, usually, when the longitudinally oriented fibers consist of organic fibers, the transversely oriented fibers also consist of organic fibers; and when the longitudinally oriented fibers consist of inorganic fibers, the transversely oriented fibers also consist of inorganic fibers.

More preferably, the network fibers consist of organic fibers. This makes it possible to more effectively prevent or reduce cracking in the mat material at the time of wrapping.

For example, both the longitudinally oriented fibers and the transversely oriented fibers may consist of organic fibers.

Specifically, examples of preferred materials of the network fibers include polyethylene terephthalate (PET), polyethylene (PE), and polypropylene (PP).

In the mat material according to the first embodiment of the present disclosure, the base mat further contains at least one of an inorganic binder or an organic binder.

The amount of the inorganic binder used (weight of inorganic binder/weight of mat material) may be more than 0 wt% and 15 wt% or less, for example.

The amount of the organic binder used (weight of organic binder/weight of mat material) may be more than 0 wt% and 15 wt% or less.

The inorganic binder may be alumina sol, silica sol, or the like.

Examples of the organic binder that may be preferably used include water-soluble organic polymers such as acrylic resin, acrylate latex, rubber latex, carboxymethylcellulose, and polyvinyl alcohol; thermoplastic resins such as styrene resin; and thermosetting resins such as epoxy resin.

Subsequently, a method for producing a mat material of the present disclosure, which is a method that can produce the mat material according to the first embodiment of the present disclosure, is described.

The method for producing a mat material of the present disclosure includes: a base mat preparing step of preparing a base mat containing inorganic fibers and including a first main surface and a second main surface; a sheet material preparing step of preparing a sheet material containing fibers stretching in at least two directions; a sheet material processing step of spraying a hot melt powder onto the sheet material and heating to allow the hot melt powder to adhere to the sheet material; and a sheet material attaching step of thermocompression bonding the sheet material with the hot melt powder adhered thereto to at least one of the first or second main surface of the base mat so as to attach the sheet material to the base mat.

In the method for producing a mat material of the present disclosure, preferably, two types of mat materials are produced. The two types of mat materials include a first mat material and a second mat material. Each of these mat materials is the mat material according to the first embodiment of the present disclosure.

In the method for producing a mat material of the present disclosure, first, a base mat including a first main surface and a second main surface, and a sheet material containing fibers stretching in at least two directions are prepared.

The structure and physical properties of the base mat prepared here are the same as those of the base mat described above for the mat material according to the first embodiment of the present disclosure. Thus, a detailed description thereof is omitted here.

The structure and physical properties of the sheet material prepared here are the same as those of the network described above for the mat material according to the first embodiment of the present disclosure, except that no bases are included. Thus, a detailed description thereof is omitted here.

Preferably, the base mat and the sheet material prepared here are large sheets from which many mat materials according to the first embodiment of the present disclosure can be obtained by punching.

The base mat can be obtained by various methods. For example, it can be produced by a papermaking method or a needling method.

In the case of the papermaking method, for example, the base mat can be produced in the following manner.

Inorganic fibers are spread, and the spread inorganic fibers are dispersed in a solvent to obtain a mixture. The mixture is poured into a mold with a mesh for filtering at the bottom, and the solvent in the mixture is removed, whereby an inorganic fiber aggregate is obtained. The inorganic fiber aggregate is then dried, whereby a base mat can be obtained.

In the case of the needling method, for example, the base mat can be produced in the following manner.

A spinning mixture containing an aqueous basic aluminum chloride solution, silica sol, and the like as raw materials is spun by a blowing method, whereby an inorganic fiber precursor having an average fiber diameter of 3 to 10 µm is produced. Subsequently, the inorganic fiber precursor is compressed to produce a continuous base mat having a predetermined size, followed by firing, whereby a base mat is obtained. Needle punching is performed before or after the firing to entangle the inorganic fibers with each other.

The sheet material can be produced by the following method, for example.

First, a raw material (e.g., resin) is subjected to melt spinning by a spinning device for non-woven fabrics such as a melt blown nonwoven fabric and a spunbond nonwoven fabric. Subsequently, the fibers are aligned and stretched in the machine direction (MD) and the cross direction (CD), whereby a longitudinally stretched web is produced in which a continuous body consisting of long filaments is stretched in the machine direction, and a transversely stretched web is produced in which a continuous body similarly consisting of long filaments is stretched in the cross direction. Then, the longitudinally stretched web and the transversely stretched web are stacked and joined together, whereby a multilayer sheet material (a non-woven fabric) is produced in which longitudinally oriented fibers and transversely oriented fibers are stacked.

The longitudinally stretched web and the transversely stretched web may be joined by a method such as a water jet method, a needle punching method, a through-air method, a hot embossing method, an adhesive bonding method, a stitchbonding method, an ultrasonic sealing method, or an induction-heat sealing method.

Next, a hot melt powder (powdery hot melt adhesive) is sprayed onto the sheet material and heated to allow the hot melt powder to adhere to the sheet material.

Here, the heating temperature and the heating time are not limited and can be suitably set according to the characteristics of the hot melt powder.

Next, the sheet material with the hot melt powder adhered thereto is thermocompression bonded to at least one of the first or second main surface of the base mat so that the sheet material is attached to the base mat.

At this point, preferably, a large sheet material is attached to a large base mat to obtain a laminated body.

Here, thermocompression bonding conditions are also not limited and can be suitably set according to the characteristics of the hot melt powder. Yet, the heating temperature is preferably 115°C or higher and 140°C or lower, more preferably 120°C or higher and 130°C or lower, and the heating time is preferably 25 seconds or more and 60 seconds or less, more preferably 30 seconds or more and 50 seconds or less.

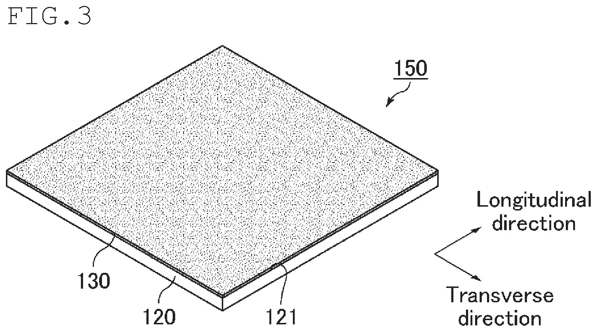

FIG. 3 is a schematic perspective view of an example laminated body.

A laminated body 150 includes a large sheet material 130 attached to a first main surface 121 of a large base mat 120. It is a rectangular sheet having two vertical sides and two horizontal sides.

The sheet material 130 is a sheet material in which longitudinally oriented fibers and transversely oriented fibers are stacked. The orientation direction of the longitudinally oriented fibers of the sheet material 130 is the longitudinal direction and is parallel to the two vertical sides of the laminated body 150. The orientation direction of the transversely oriented fibers of the sheet material 130 is the transverse direction and is parallel to the two horizontal sides of the laminated body 150.

Subsequently, the laminated body is subjected to punching, whereby a mat material having a predetermined shape can be produced.

In the method for producing a mat material of the present disclosure, a hot melt powder is sprayed onto a sheet material containing fibers stretching in at least two directions and heated to allow the hot melt powder to adhere to the sheet material, and the sheet material with the hot melt powder adhered thereto is thermocompression bonded to at least one of the first or second main surface of the base mat so that the sheet material is attached to the base mat. Thus, the sheet material can be attached to the base mat while the fibers forming the sheet material, i.e., the network fibers, are prevented from being melted. This can prevent or reduce a decrease in strength and flexibility of the network fibers. In addition, a network having bases can be formed by heating and melting the hot melt powder. As a result, cracking in the mat material at the time of wrapping can be prevented or reduced.

Preferably, the punching of the laminated body involves a step of obtaining two types of mat materials, i.e., a first mat material and a second mat material. The first mat material is obtained such that the longitudinal direction of the laminated body is the long-side direction of the mat material and that the transverse direction of the laminated body is the short-side direction of the mat material. The second mat material is obtained such that the transverse direction of the laminated body is the long-side direction of the mat material and that the longitudinal direction of the laminated body is the short-side direction of the mat material.

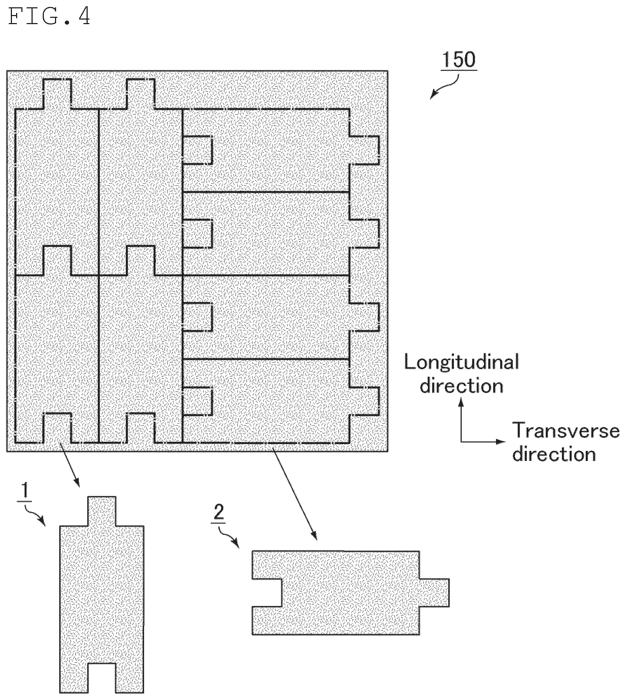

FIG. 4 is a schematic top view of an example step of obtaining two types of mat materials by punching.

The laminated body 150 shown in FIG. 4 is subjected to punching, whereby two types of mat materials are obtained.

The left side of FIG. 4 shows that a first mat material 1 is obtained in which the orientation direction of the longitudinally oriented fibers of the sheet material (longitudinal direction shown in FIG. 4) is the long-side direction of the mat material, and the orientation direction of the transversely oriented fibers of the sheet material (transverse direction shown in FIG. 4) is the short-side direction of the mat material.

The right side of FIG. 4 shows that a second mat material 2 is obtained in which the orientation direction of the transversely oriented fibers of the sheet material (transverse direction shown in FIG. 4) is the long-side direction of the mat material, and the orientation direction of the longitudinally oriented fibers of the sheet material (longitudinal direction shown in FIG. 4) is the short-side direction of the mat material.

In the first mat material and the second mat material, the fibers (longitudinally oriented fibers or transversely oriented fibers) of the sheet material, which are oriented in the long-side direction of the mat material, and the fibers (transversely oriented fibers or longitudinally oriented fibers) of the sheet material, which are oriented in the short-side direction of the mat material, are equivalent in terms of number and density. Thus, the first mat material and the second mat material show similar tensile strength and wrapping properties.

In punching, preferably, the orientation direction of one of the longitudinally oriented fibers and the transversely oriented fibers of the sheet material is parallel to the long-side direction of the first mat material and is also parallel to the short-side direction of the second mat material.

In addition, preferably, the orientation direction of the other of the longitudinally oriented fibers and the transversely oriented fibers of the sheet material is parallel to the short-side direction of the first mat material and is also parallel to the long-side direction of the second mat material.

The punching directions shown in FIG. 4 are the directions that satisfy the above conditions.

A description was given on the method that uses the sheet material containing fibers stretching in at least two directions in the method for producing a mat material of the present disclosure, but the mat material according to the first embodiment of the present disclosure can be produced without using the sheet material.

For example, fibers stretching in different directions may be sequentially stacked using a hot melt powder on at least one of the first or second main surface of the base mat. Specifically, first, longitudinally oriented fibers (longitudinally stretched web) may be thermocompression bonded to at least one of the first or second main surface of the base mat using a hot melt powder, and then transversely oriented fibers (transversely stretched web) may be thermocompression bonded to the longitudinally oriented fibers using a hot melt powder.

Next, the mat material according to the second embodiment of the present disclosure is described.

The mat material according to the second embodiment of the present disclosure includes a base mat containing inorganic fibers and including a first main surface and a second main surface; and a web on at least one of the first or second main surface, the web containing fiber bundles each formed from multiple fibers entangled together and single fibers.

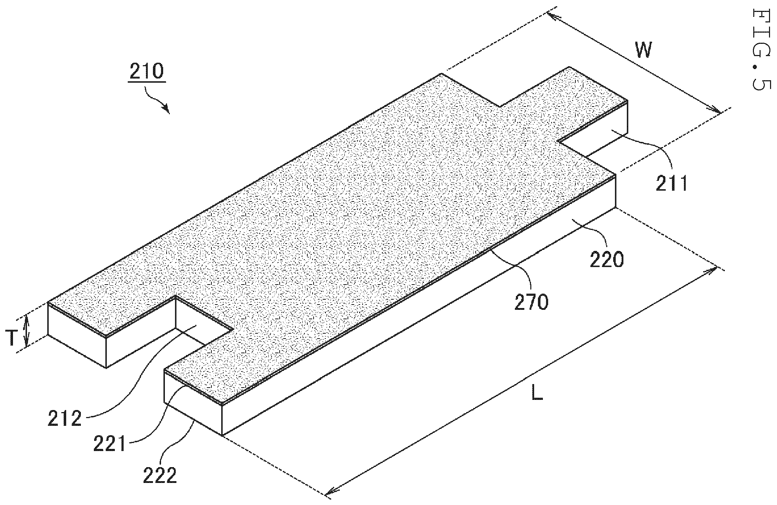

FIG. 5 is a schematic perspective view of an example mat material according to the second embodiment of the present disclosure.

A mat material 210 shown in FIG. 5 has a structure including a first main surface 221 and a second main surface 222 and a web 270 on the first main surface 221 of the base mat 220, the web 270 containing fiber bundles and single fibers (not shown in FIG. 5).

Out of two ends of the mat material 210 in a long-side direction (the direction indicated by the double-headed arrow L in FIG. 5), one end (a first end) has a projection 211 formed thereon, and the other end (a second end) has a recess 212 formed thereon.

The projection 211 is formed as a result of a projection on the base mat 220 being overlaid on a projection on the web 270. The recess 212 is formed as a result of a recess on the base mat 220 being overlaid on a recess on the web 270.

The projection and the recess of the mat material have shapes that perfectly fit each other when the mat material is wrapped around an exhaust gas conversion apparatus, an exhaust gas treatment body, or an exhaust pipe each having a cylindrical outer periphery.

The direction indicated by the double-headed arrow W in FIG. 5 is a short-side direction of the mat material, and the direction indicated by the double-headed arrow T is a thickness direction of the mat material.

FIG. 5 shows a case where the web 270 is formed on only the first main surface 221 of the base mat 220, but the web 270 may be formed on each of the first main surface 221 and the second main surface 222 of the base mat 220. The web 270 may also be formed on a side surface of the base mat 220, in addition to the first main surface 221 and/or the second main surface 222 of the base mat 220.

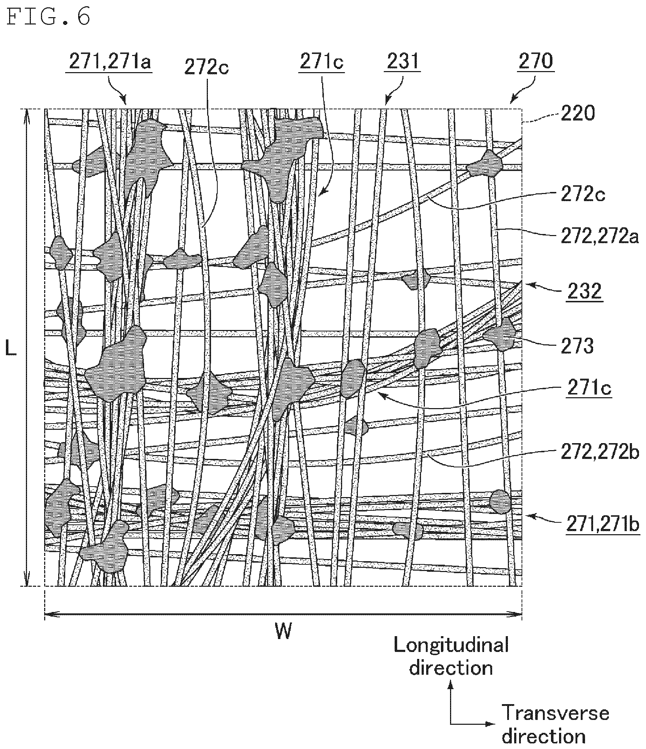

FIG. 6 is a schematic enlarged plan view of the web shown in FIG. 5.

In FIG. 6, the base mat 220 is also shown in a dotted line in order to show the layout of the web 270 and the base mat 220.

As shown in FIG. 6, the web 270 contains fiber bundles 271 each formed from multiple fibers entangled together, and single fibers 272.

This can prevent or reduce a decrease in strength and flexibility of the fibers forming the web 270, so that cracking in the mat material 210 at the time of wrapping can be prevented or reduced.

The multiple fibers constituting the fiber bundles 271 are twisted and entangled together. Thus, the fibers constituting the fiber bundles 271 are not fused to each other but they are simply entangled together, which can prevent or reduce a decrease in flexibility of the web 270 as described above.

The number of fibers constituting each fiber bundle 271 is not limited, but it is preferably 2 to 10, more preferably 3 to 7.

The single fibers 272 are fibers not entangled with other fiber (s).

The fiber bundles 271 include multiple fiber bundles stretching in different stretching directions. The web 270 contains these multiple fiber bundles and the single fibers 272. As a result, the web 270 can contain similar numbers of fibers in the longitudinal direction and fibers in the transverse direction.

Here, the fibers forming the web 270 include fibers stretching in two directions, i.e., longitudinally oriented fibers 231 stretching in the longitudinal direction and transversely oriented fibers 232 stretching in the transverse direction.

The orientation direction of the longitudinally oriented fibers 231 is a longitudinal direction and is generally parallel to the long-side direction (the direction indicated by the double-headed arrow L in FIG. 6) of the mat material 210.

The orientation direction of the transversely oriented fibers 232 is a transverse direction and is generally parallel to the short-side direction (the direction indicated by the double-headed arrow W in FIG. 6) of the mat material 210.

Here, the direction aligned with a length direction of fibers constituting the longitudinally oriented fibers 231 is the orientation direction of the longitudinally oriented fibers 231, and the direction aligned with a length direction of fibers constituting the transversely oriented fibers 232 is the orientation direction of the transversely oriented fibers 232.

The longitudinally oriented fibers 231 in which the fibers are oriented (arranged) in the longitudinal direction and the transversely oriented fibers 232 in which the fibers are oriented (arranged) in the transverse direction are stacked, thus constituting a non-woven fabric with longitudinal and transverse fiber orientations.

This non-woven fabric is produced by a production process in which fibers are directly spun from a raw material. The spun fibers are stretched in the longitudinal direction and the transverse direction, so that long filaments are oriented in the longitudinal direction and the transverse direction of the non-woven fabric.

The non-woven fabric is a see-through non-woven fabric and includes openings surrounded by the longitudinally oriented fibers 231 and the transversely oriented fibers 232.

Some of the longitudinally oriented fibers 231 are entangled to form a longitudinally oriented fiber bundle 271a that is stretched in the longitudinal direction, and the remaining fibers of the longitudinally oriented fibers 231 are each present as a longitudinally oriented single fiber 272a that is stretched in the longitudinal direction.

Likewise, some of the transversely oriented fibers 232 are entangled to form a transversely oriented fiber bundle 271b that is stretched in the transverse direction, and the remaining fibers are each present as a transversely oriented single fiber 272b that is stretched in the transversely oriented fibers 232.

The fibers forming the web 270 may not necessarily be linearly stretched. Preferably, at least some of the fibers forming the web 270 are curved. In other words, preferably, a curved fiber bundle 271c and a curved single fiber 272c are present as shown in FIG. 6. This increases intersections of the fibers forming the web 270 and can disperse stress applied to the web 270, making it possible to further prevent or reduce cracking in the mat material 210 at the time of wrapping.

Specifically, the curved fiber bundle 271c and the curved single fiber 272c are each curved, for example, in an arc, while extending along its orientation direction (the longitudinal direction or the transverse direction).

The web 270 may contain only one of the curved fiber bundle 271c or the curved the single fiber 272c but preferably contains both of them in order to prevent or reduce cracking in the mat material 210.

FIG. 6 shows a case where a single layer of the longitudinally oriented fibers 231 and a single layer of the transversely oriented fibers 232 are stacked. However, the number of layers of the longitudinally oriented fibers 231 and the transversely oriented fibers 232 to be stacked is not limited, and a total of three or more layers of the longitudinally oriented fibers 231 and the transversely oriented fibers 232 may be alternately stacked.

The stacking order of the longitudinally oriented fibers 231 and the transversely oriented fibers 232 is also not limited.

As described above, the web 270 is three-dimensionally formed. In other words, the web 270 extends in the long-side direction and the short-side direction of the mat material 210 and has a thickness in the thickness direction of the mat material 210.

This further increases the strength of the web 270 and disperses stress applied to the web 270, which can more effectively prevent or reduce cracking in the mat material 210 at the time of wrapping.

The web 270 may contain fibers stretching in three or more directions. For example, the web 270 may contain diagonally extending fibers, in addition to the longitudinally oriented fibers 231 and the transversely oriented fibers 232. These diagonally extending fibers may include a diagonally extending fiber bundle and a diagonally extending single fiber.

The relationship of the orientation direction of the longitudinally oriented fibers 231 and the transversely oriented fibers 232 with respect to the long-side direction and the short-side direction of the mat material 210 is not limited. Preferably, the orientation direction of one of the longitudinally oriented fibers 231 and the transversely oriented fibers 232 is parallel to the long-side direction of the mat material 210, and the orientation direction of the other one of the longitudinally oriented fibers 231 and the transversely oriented fibers 232 is parallel to the short-side direction of the mat material 210.

In other words, preferably, one of the orientation direction of the longitudinally oriented fiber bundle 271a and the longitudinally oriented single fiber 272a stretching in the longitudinal direction and the orientation direction of the transversely oriented fiber bundle 271b and the transversely oriented single fiber 272b stretching in the transverse direction is parallel to the long-side direction of the mat material 210, and the other orientation direction is parallel to the short-side direction of the mat material 210.

The web 270 shown in FIG. 5 and FIG. 6 further contains multiple bases 273 made of an organic substance, and one or more fiber bundles 271 and one or more single fibers 272 are stretching in multiple directions from each the base 273.

The bases 273 are distributed within the web 270. Unlike one-dimensionally stretching fibers, each base 273 expands in the long-side direction, short-side direction, and thickness direction (in particular, the long-side direction and short-side direction) of the mat material 210. The bases 273 are fused to join the fiber bundles 271 and the single fibers 272 stretching in different directions to each other. In other words, the bases 273 are disposed at regions where one or more fiber bundles 271 and one or more single fibers 272 intersect each other, and the bases 273 join these fibers together.

Each base 273 also plays the role of fixing the web 270 to the base mat 220. In other words, the bases 273 are fused to join the fibers forming the web 270 to the base mat 220.

As described above, the web 270 is formed from a nonwoven fabric in which the fiber bundles 271 and the single fibers 272 oriented in multiple directions (e.g., the longitudinally oriented fibers 231 and the transversely oriented fibers 232) are stacked, and the bases 273 distributed on the non-woven fabric and bonding the fibers that are located at different layers and oriented in different directions to each other (e.g., the longitudinally oriented fibers 231 and the transversely oriented fibers 232 to each other).

Hereinafter, the details of these structures are described.

The base mat constituting the mat material according to the second embodiment of the present disclosure contains inorganic fibers. Any inorganic fibers, such as aluminasilica fibers, alumina fibers, or silica fibers, may be used. Glass fibers or biosoluble fibers may also be used. Fibers may be selected depending on properties required for the mat material, such as heat resistance and wind erosionresistance. Use of large-diameter fibers and long fibers compatible with country-specific environmental regulations is preferred.

Of these, low-crystalline alumina inorganic fibers are preferred, and low-crystalline alumina inorganic fibers having a mullite composition are more preferred. In addition, spinel-type compound-containing inorganic fibers are still more preferred.

The base mat has a long-side direction which is a wrapping direction, and a short-side direction perpendicular to the long-side direction.

Out of two ends of the base mat in the long-side direction, preferably, one end (a first end) has a projection formed thereon, and the other end (a second end) has a recess formed thereon. Preferably, the projection and the recess of the base mat have shapes that perfectly fit each other when the base mat is wrapped around an exhaust gas conversion apparatus, an exhaust gas treatment body, or an exhaust pipe each having a cylindrical periphery.

The base mat may have a shape without a projection and a recess.

Preferably, the base mat has a thickness of 2 to 30 mm.

A base mat having a thickness of less than 2 mm has poor thermal insulation and soundproofing properties because it is too thin. In contrast, a base mat having a thickness of more than 30 mm has poor flexibility and is poorly mounted on a member on which the base mat is to be mounted.

The bulk density of the base mat is not limited but is preferably 0.05 to 0.30 g/cm³.

When the base mat has a bulk density of less than 0.05 g/cm³, the inorganic fibers are loosely entangled and easily separated. This makes it difficult to maintain the shape of the base mat in a predetermined shape. The base mat having a bulk density of more than 0.30 g/cm³ is hard and poorly mounted on a member to which the base mat is to be mounted. Such a base mat is prone to cracking.

A web is formed on at least one of the first or second main surface of the base mat constituting the mat material according to the second embodiment of the present disclosure. The web contains a fiber bundle formed from multiple fibers entangled together and single fibers.

Preferably, the fibers forming the web (hereinafter referred to as "web fibers") are long filaments.

The long filaments preferably have a length longer than the usual length of staple fibers (e.g., 10 to 50 mm). The average filament length is preferably longer than 100 mm, more preferably several hundred millimeters or longer.

The long filaments may be long continuous fibers.

The average fiber diameter of main constituent filaments of the web fibers is usually 10 µm or less, preferably around 5 µm.

The web may further contain multiple bases made of an organic substance.

The organic substance constituting the bases is different from the material of web fibers. Specifically, the bases are formed by heat fusion of a hot melt powder (hot melt adhesive) to the web fibers.

Thus, preferably, a glass transition temperature Tg3 of the web fibers is higher than a glass transition temperature Tg4 of the organic substance constituting the bases. This facilitates formation of the web containing the bases using a hot melt powder.

The glass transition temperature Tg3 of the web fibers is not limited, but is preferably -140°C or higher and 90°C or lower, more preferably -130°C or higher and 80°C or lower.

The glass transition temperature Tg4 of the organic substance constituting the bases is also not limited, but is preferably -140°C or higher and 90°C or lower, more preferably -130°C or higher and 80°C or lower.

Further, the difference between the glass transition temperature Tg3 of the web fibers and the glass transition temperature Tg4 of the organic substance constituting the bases, i.e., Tg3 - Tg4, is also not limited. Yet, the difference is preferably 220°C or less, more preferably 200°C or less for integration of the web fibers with the bases.

The organic substance constituting the bases is not limited as long as it is can be used as a hot melt powder. Specific examples include polyethylene (PE), polyethylene terephthalate (PET), polyamide (PA), and ethylene-vinyl acetate copolymer resin (EVA).

Preferably, the web has a planar shape that is substantially the same as that of the base mat. In other words, in a plan view, preferably, the region where the web is arranged substantially coincides with the region where the base mat is arranged.

Preferably, a sheet material including the web is formed, and the sheet material is attached to the base mat. Preferably, the sheet material is attached to the base mat via a hot melt powder.

The basis weight of the sheet material including the web is not limited, but is preferably 5 g/m² or more and 100 g/m² or less, more preferably 5 g/m² or more and 50 g/m² or less, still more preferably 5 g/m² or more and 30 g/m² or less.

The term "basis weight of the sheet material" herein refers to the basis weight per sheet material.

Preferably, the web fibers include at least one of organic or inorganic fibers.

For example, the longitudinally oriented fibers may include organic fibers and/or inorganic fibers, and the transversely oriented fibers may include organic fibers and/or inorganic fibers. The longitudinally oriented fibers and the transversely oriented fibers may be made of different materials. Yet, usually, when the longitudinally oriented fibers consist of organic fibers, the transversely oriented fibers also consist of organic fibers; and when the longitudinally oriented fibers consist of inorganic fibers, the transversely oriented fibers also consist of inorganic fibers.

More preferably, the web fibers consist of organic fibers. This makes it possible to more effectively prevent or reduce cracking in the mat material at the time of wrapping.

For example, both the longitudinally oriented fibers and the transversely oriented fibers may consist of organic fibers.

Specifically, examples of preferred materials of the web fibers include polyethylene terephthalate (PET), polyethylene (PE), and polypropylene (PP).

In the mat material according to the second embodiment of the present disclosure, preferably, the base mat further contains at least one of an inorganic binder or an organic binder.

The amount of the inorganic binder used (weight of inorganic binder/weight of mat material) may be more than 0 wt% and 15 wt% or less, for example.

The amount of the organic binder used (weight of organic binder/weight of mat material) may be more than 0 wt% and 15 wt% or less.

The inorganic binder may be alumina sol, silica sol, or the like.

Examples of the organic binder that may be preferably used include water-soluble organic polymers such as acrylic resin, acrylate latex, rubber latex, carboxymethylcellulose, and polyvinyl alcohol; thermoplastic resins such as styrene resin; and thermosetting resins such as epoxy resin.

Subsequently, a method for producing a mat material according to the second embodiment of the present disclosure is described.

The method for producing a mat material according to the second embodiment of the present disclosure includes: a base mat preparing step of preparing a base mat containing inorganic fibers and including a first main surface and a second main surface; a sheet material preparing step of preparing a sheet material containing a fiber bundle formed from multiples fibers entangled together and single fibers; a sheet material processing step of spraying a hot melt powder onto the sheet material and heating to allow the hot melt powder to adhere to the sheet material; and a sheet material attaching step of thermocompression bonding the sheet material with the hot melt powder adhered thereto to at least one of the first or second main surface of the base mat so as to attach the sheet material to the base mat.

Here, preferably, two types of mat materials are produced. The two types of mat materials include a first mat material and a second mat material. Each of these mat materials is the mat material according to the second embodiment of the present disclosure.

In the production method, first, a base mat including a first main surface and a second main surface, and a sheet material containing a fiber bundle formed from multiple fibers entangled together and single fibers are prepared.

The structure and physical properties of the base mat prepared here are the same as those of the base mat described above for the mat material according to the second embodiment of the present disclosure. Thus, a detailed description thereof is omitted here.

The structure and physical properties of the sheet material prepared here are the same as those of the web described above for the mat material according to the second embodiment of the present disclosure, except that no bases are included. Thus, a detailed description thereof is omitted here.

Preferably, the base mat and the sheet material prepared here are large sheets from which many mat materials according to the second embodiment of the present disclosure can be obtained by punching.

The base mat can be obtained by various methods. For example, it can be produced by a papermaking method or a needling method. Specifically, the base mat can be produced by the method described in the method for producing a mat material of the present disclosure, which is the method capable of producing the mat material according to the first embodiment of the present disclosure.

For example, the sheet material can be produced by the method described in the method for producing a mat material of the present disclosure, which is the method capable of producing the mat material according to the first embodiment of the present disclosure.

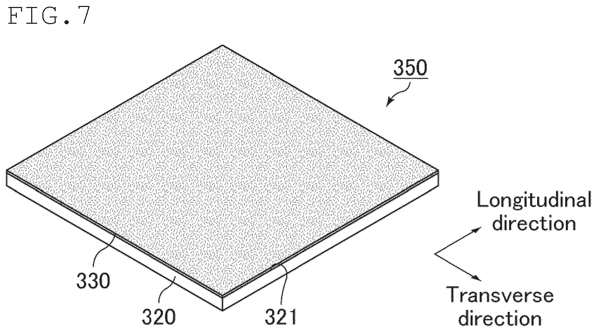

FIG. 7 is a schematic perspective view of another example laminated body.

A laminated body 350 includes a large sheet material 330 attached to a first main surface 321 of a large base mat 320. It is a rectangular sheet having two vertical sides and two horizontal sides.

The sheet material 330 is a sheet material in which longitudinally oriented fibers and transversely oriented fibers (both including fiber bundles and single fibers) are stacked. The orientation direction of the longitudinally oriented fibers of the sheet material 330 is the longitudinal direction and is parallel to the two vertical sides of the laminated body 350. The orientation direction of the transversely oriented fibers of the sheet material 330 is the transverse direction and is parallel to the two horizontal sides of the laminated body 350.

Subsequently, the laminated body is subjected to punching, whereby a mat material having a predetermined shape can be produced.

In the production method, a hot melt powder is sprayed onto a sheet material containing a fiber bundle formed from multiple fibers entangled together and single fibers and heated to allow the hot melt powder to adhere to the sheet material, and the sheet material with the hot melt powder adhered thereto is thermocompression bonded to at least one of the first or second main surface of the base mat so that the sheet material is attached to the base mat. Thus, the sheet material can be attached to the base mat while the fibers forming the sheet material, i.e., the web fibers, are prevented from being melted. This can more effectively prevent or reduce a decrease in strength and flexibility of the web fibers. As a result, cracking in the mat material at the time of wrapping can be more effectively prevented or reduced.

Preferably, the punching of the laminated body involves a step of obtaining two types of mat materials, i.e., a first mat material and a second mat material. The first mat material is obtained such that the longitudinal direction of the laminated body is the long-side direction of the mat material and that the transverse direction of the laminated body is the short-side direction of the mat material. The second mat material is obtained such that the transverse direction of the laminated body is the long-side direction of the mat material and that the longitudinal direction of the laminated body is the short-side direction of the mat material.

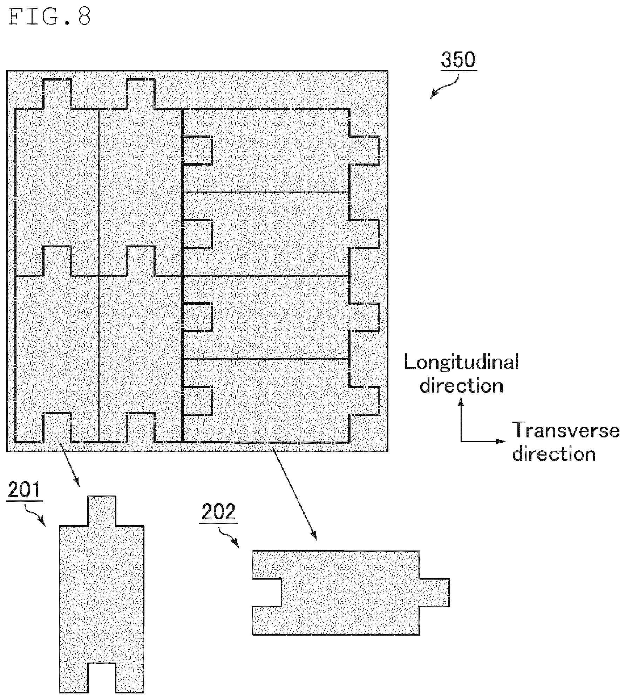

FIG. 8 is a schematic top view of another example step of obtaining two types of mat materials by punching.

The laminated body 350 shown in FIG. 8 is subjected to punching, whereby two types of mat materials are obtained.

The left side of FIG. 8 shows that a first mat material 201 is obtained in which the orientation direction of the longitudinally oriented fibers (including fiber bundles and single fibers) of the sheet material (longitudinal direction shown in FIG. 8) is the long-side direction of the mat material, and the orientation direction of the transversely oriented fibers (including fiber bundles and single fibers) of the sheet material (transverse direction shown in FIG. 8) is the short-side direction of the mat material.

The right side of FIG. 8 shows that a second mat material 202 is obtained in which the orientation direction of the transversely oriented fibers (including fiber bundles and single fibers) of the sheet material (transverse direction shown in FIG. 8) is the long-side direction of the mat material, and the orientation direction of the longitudinally oriented fibers (including fiber bundles and single fibers) of the sheet material (longitudinal direction shown in FIG. 8) is the short-side direction of the mat material.

In the first mat material 201 and the second mat material 202, the fibers (longitudinally oriented fibers or transversely oriented fibers of the sheet material) which are oriented in the long-side direction of the mat material and the fibers (transversely oriented fibers or longitudinally oriented fibers of the sheet material) which are oriented in the short-side direction of the mat material are equivalent in terms of number and density. Thus, the first mat material and the second mat material show similar tensile strength and wrapping properties.

In punching, preferably, the orientation direction of one of the longitudinally oriented fibers and the transversely oriented fibers of the sheet material is parallel to the long-side direction of the first mat material and is also parallel to the short-side direction of the second mat material.

In addition, preferably, the orientation direction of the other of the longitudinally oriented fibers and the transversely oriented fibers of the sheet material is parallel to the short-side direction of the first mat material and is also parallel to the long-side direction of the second mat material.

The punching directions shown in FIG. 8 are the directions that satisfy the above conditions.

A description was given on the method that uses the sheet material including fiber bundles each formed from multiple fibers entangled together and single fibers (i.e., the multilayer sheet material in which the longitudinally oriented fibers and the transversely oriented fibers are stacked) and the hot melt powder, but the mat material according to the second embodiment of the present disclosure can be produced without using the sheet material or the hot melt powder.

Specifically, for example, longitudinally oriented fibers (longitudinally stretched web) including fiber bundles and single fibers and impregnated with a binder may be thermocompression bonded to at least one of the first or second main surface of the base mat, and then transversely oriented fibers (transversely stretched web) including fiber bundles and single fibers and impregnated with a binder may be thermocompression bonded to the longitudinally oriented fibers using a hot melt powder.

Hereinafter, the exhaust gas conversion apparatus of the present disclosure is described.

The exhaust gas conversion apparatus of the present disclosure includes an exhaust gas treatment body through which exhaust gas passes; a holding sealing material that is used by being wrapped around an outer periphery of the exhaust gas treatment body; and a casing for housing the exhaust gas treatment body with the holding sealing material wrapped therearound, wherein the holding sealing material is the mat material according to the first or second embodiment of the present disclosure.

As described above, it is possible to prevent or reduce cracking in the mat materials according to the first and second embodiments of the present disclosure at the time of wrapping. Thus, the exhaust gas conversion apparatus of the present disclosure can prevent leakage of untreated exhaust gas from a crack in the mat material. Thus, the exhaust gas conversion apparatus of the present disclosure can prevent leakage of untreated exhaust gas from a crack in the mat material (the holding sealing material).

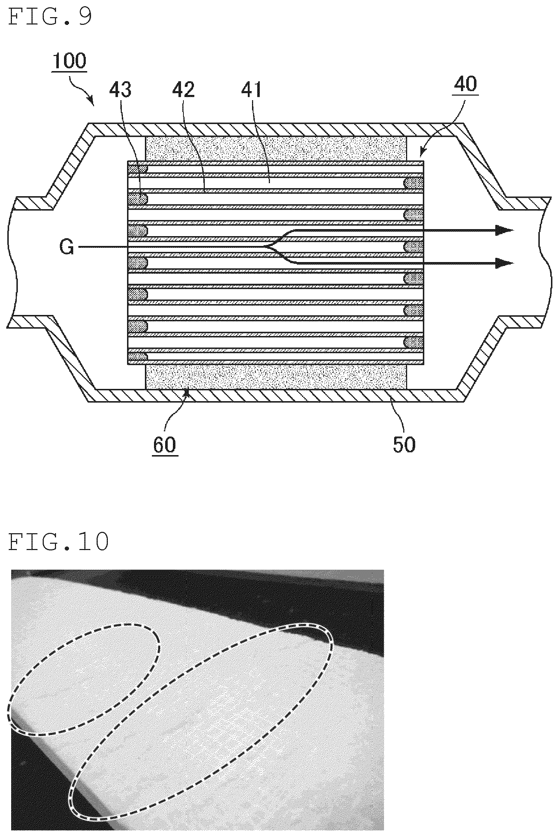

FIG. 9 is a schematic cross-sectional view of an example exhaust gas conversion apparatus of the present disclosure.

As shown in FIG. 9, an exhaust gas conversion apparatus 100 of the present disclosure includes a casing 50, an exhaust gas treatment body 40 housed in the casing 50 such that exhaust gas passes therethrough, and a holding sealing material 60 arranged between the exhaust gas treatment body 40 and the casing 50 to hold the exhaust gas treatment body 40.

The holding sealing material 60 is a mat material wrapped around an outer periphery of the exhaust gas treatment body.

The exhaust gas treatment body 40 has a pillar shape in which many cells 41 are arranged in parallel in a longitudinal direction, with a cell wall 42 between the cells. Each cell is plugged at one end with a plug 43.

If necessary, to one end of the casing 50 are connected an inlet tube for introducing exhaust gas discharged from an internal combustion engine, and an outlet tube for discharging the exhaust gas that has passed through the exhaust gas conversion apparatus to the outside.

Passage of exhaust gas through the exhaust gas conversion apparatus 100 having the above-described configuration is described below with reference to FIG. 9. As shown in FIG. 9, exhaust gas that is discharged from the internal combustion engine and that flowed into exhaust gas conversion apparatus 100 (in FIG. 9, the exhaust gas is indicated by G, and the flow of exhaust gas is indicated by arrows) flows into one of the cells 41 that are open at an exhaust gas inlet-side end face of the exhaust gas treatment body (honeycomb filter) 40, and then passes through the cell wall 42 between the cells 41. Here, PM in the exhaust gas is collected by the cell wall 42, and the exhaust gas is purified. The purified exhaust gas flows out from another cell 41 that is open at an exhaust gas outlet-side end face and is discharged to the outside.

In the exhaust gas conversion apparatus 100 shown in FIG. 9, the holding sealing material 60 is the mat material according to the first or second embodiment of the present disclosure. At least one of a first or second main surface of the holding sealing material 60 is made from the network constituting the mat material according to the first embodiment of the present disclosure or the web constituting the mat material according to the second embodiment of the present disclosure.

Any heat-resistant metal can be used as a material of the casing constituting the exhaust gas conversion apparatus of the present disclosure. Specific examples include metals such as stainless steel, aluminum, and iron.

A suitable shape of the casing is, for example, a substantially cylindrical shape, a clam-shell shape, a shape with a substantially elliptical cross-section, a shape with a substantially polygonal cross-section, or the like.

The exhaust gas treatment body 40 shown in FIG. 9 is a filter in which each cell 41 is plugged at one end with the plug 43. However, in the exhaust gas treatment body constituting the exhaust gas conversion apparatus of the present disclosure, each cell may not necessarily be plugged at one end. Such an exhaust gas treatment body can be suitably used as a catalyst carrier.

The exhaust gas treatment body 40 may include a porous non-oxide ceramic material such as silicon carbide or silicon nitride, or may include a porous oxide ceramic material such as alumina, cordierite, or mullite. Of these, silicon carbide is preferred.

The density of the cells in a cross section of the exhaust gas treatment body 40 is not limited, but a preferred lower limit is 31.0 pcs/cm² (200 pcs/inch²), and a preferred upper limit is 93.0 pcs/cm² (600 pcs/inch²). A more preferred lower limit is 38.8 pcs/cm² (250 pcs/inch²), and a more preferred upper limit is 77.5 pcs/cm² (500 pcs/inch²).

The exhaust gas treatment body 40 may support a catalyst for conversion of exhaust gas. Preferred examples of catalysts to be supported include noble metals such as platinum, palladium, and rhodium. Of these, platinum is more preferred. Examples of other catalysts that can be used include alkali metals such as potassium and sodium and alkaline-earth metals such as barium. Each of these catalysts may be used alone or in combination of two or more thereof.

These catalysts, when supported, facilitate removal of PM by combustion and allow conversion of toxic exhaust gas.

The mat material of the present disclosure may be used for any application. It may be used for applications such as batteries, for example, in addition to exhaust gas conversion apparatuses. Specifically, the mat material can be used in energy storage devices for electric vehicles or hybrid vehicles driven by electric motors. For example, the mat material, when placed on a surface of an energy storage device component such as a battery cell of an energy storage device or a busbar that interconnects battery cells can prevent or reduce damage to other energy storage device components even when the temperature of a battery cell rises rapidly due to battery cell internal short circuit, overcharging, or the like and the battery cell continues to generate heat to cause thermal runaway.

Use of the mat material of the present disclosure for a top cover, side walls, and a bottom wall of a battery case that houses a rechargeable battery can reliably prevent the spread of fire to the outside even when a fire breaks out during thermal runaway. In such an event, use of a laminate of the mat materials of the present disclosure is more preferred.

The present description discloses the following matter.

Disclosure (1) relates to a mat material including: a base mat containing inorganic fibers and including a first main surface and a second main surface; and a network on at least one of the first or second main surface, the network containing multiple bases made of an organic substance and fibers stretching in at least two directions from each of the multiple bases.

Disclosure (2) relates to the mat material according to Disclosure (1), wherein a maximum width of each of the multiple bases is greater than a width of each of the fibers forming the network.

Disclosure (3) relates to the mat material according to Disclosure (1) or (2), wherein the fibers forming the network have a glass transition temperature higher than a glass transition temperature of the organic substance constituting the multiple bases.

Disclosure (4) relates to the mat material of any combination of Disclosure (1) to Disclosure (3), wherein the network is three-dimensionally formed.

Disclosure (5) relates to the mat material of any combination of Disclosure (1) to Disclosure (4), wherein the fibers forming the network include at least one of organic or inorganic fibers.

Disclosure (6) relates to a mat material including a base mat containing inorganic fibers and including a first main surface and a second main surface; and a web on at least one of the first or second main surface, the web containing fiber bundles each formed from multiple fibers entangled together and single fibers.

Disclosure (7) relates to the mat material according to Disclosure (6), wherein the fiber bundles include multiple fiber bundles stretching in different stretching directions, and
the web contains the multiple fiber bundles and the single fibers.

Disclosure (8) relates to the mat material according to Disclosure (6) or (7), wherein at least one of the fiber bundles or the single fibers is curved.

Disclosure (9) relates to the mat material of any combination of Disclosure (6) to Disclosure (8), wherein the web is three-dimensionally formed.

Disclosure (10) relates to the mat material of any combination of Disclosure (6) to Disclosure (9), wherein the fiber bundle includes at least one of organic or inorganic fibers, and the single fibers include at least one of organic or inorganic fibers.

Disclosure (11) relates to an exhaust gas conversion apparatus including: an exhaust gas treatment body through which exhaust gas passes;
a holding sealing material that is used by being wrapped around an outer periphery of the exhaust gas treatment body; and
a casing for housing the exhaust gas treatment body with the holding sealing material wrapped therearound,
wherein the holding sealing material is the mat material of any combination of Disclosure (1) to Disclosure (10).

Disclosure (12) relates to a method for producing a mat material, the method including: a base mat preparing step of preparing a base mat containing inorganic fibers and including a first main surface and a second main surface;
a sheet material preparing step of preparing a sheet material containing fibers stretching in at least two directions;
a sheet material processing step of spraying a hot melt powder onto the sheet material and heating to allow the hot melt powder to adhere to the sheet material; and
a sheet material attaching step of thermocompression bonding the sheet material with the hot melt powder adhered thereto to at least one of the first or second main surface of the base mat so as to attach the sheet material to the base mat.

### EXAMPLES

The following describes Examples that more specifically disclose the present disclosure. The present disclosure is not limited to these Examples.

### (Example 1)

A large base mat containing inorganic fibers (mullite fibers) with a basis weight (fiber weight per unit area) of 2400 g/m² was produced by the papermaking method.

To provide a large sheet material, a multilayer sheet material (a non-woven fabric) with longitudinal and transverse fiber orientations was prepared in which longitudinally oriented PET fibers oriented in a longitudinal direction and transversely oriented PET fibers oriented in a transverse direction were stacked. This multilayer sheet material is oriented in a direction aligned with a length direction of the PET fibers, and the angle between the orientation direction of the longitudinally oriented fibers and the orientation direction of the transversely oriented fibers is generally 90°. The sheet material has substantially square or rectangular openings. In addition, this sheet material has a basis weight of 10 g/m².

A hot melt powder was sprayed onto the sheet material and heated to allow the hot melt powder to adhere to the sheet material. The hot melt powder contained polyethylene (PE) as a main component.

The base mat was thermocompression bonded to the sheet material with the hot melt powder adhered thereto to attach the sheet material to the base mat. Here, the heating temperature was 130°C and the heating time was 40 seconds. The base mat and the sheet material were pressed with a constant pressure.

As a result, a network was formed on a surface of the base mat, the network containing multiple bases made of an organic substance and fibers stretching in two directions from each of the bases, i.e., longitudinally oriented fibers stretching in the longitudinal direction and transversely oriented fibers stretching in the transverse direction.

As a result, a rectangular laminated body similar to the laminated body schematically shown in FIG. 3 was obtained.

The laminated body was subjected to punching with the same arrangement schematically shown in FIG. 4 to obtain two types of mat materials (a first mat material and a second mat material).

In the first mat material, the orientation direction of the longitudinally oriented fibers of the sheet material is parallel to the long-side direction of the mat material. In the second mat material, the orientation direction of the transversely oriented fibers of the sheet material is parallel to the long-side direction of the mat material.

### (Example 2)

A large base mat containing inorganic fibers (mullite fibers) with a basis weight (fiber weight per unit area) of 2400 g/m² was produced by the papermaking method.

To provide a large sheet material, a multilayer sheet material (a non-woven fabric) with longitudinal and transverse fiber orientations was prepared in which longitudinally oriented PET fibers oriented in a longitudinal direction and transversely oriented PET fibers oriented in a transverse direction were stacked. This multilayer sheet material is oriented in a direction aligned with a length direction of the PET fibers, and the angle between the orientation direction of the longitudinally oriented fibers and the orientation direction of the transversely oriented fibers is generally 90°. The longitudinally oriented fibers include fiber bundles formed from multiple fibers entangled together and single fibers. The transversely oriented fibers include fiber bundles formed from multiple fibers entangled together and single fibers. The sheet material has substantially square or rectangular openings. In addition, this sheet material has a basis weight of 10 g/m².

A hot melt powder was sprayed onto the sheet material and heated to allow the hot melt powder to adhere to the sheet material. The hot melt powder contained polyethylene (PE) as a main component.

The base mat was thermocompression bonded to the sheet material with the hot melt powder adhered thereto to attach the sheet material to the base mat. Here, the heating temperature was 135°C and the heating time was 35 seconds. The base mat and the sheet material were pressed with a constant pressure.

As a result, a web was formed on a surface of the base mat, the web containing multiple fiber bundles stretching in two directions (the longitudinal direction and the transverse direction) and single fibers stretching in two directions (the longitudinal direction and the transverse direction).

As a result, a rectangular laminated body similar to the laminated body schematically shown in FIG. 7 was obtained.

The laminated body was subjected to punching with the same arrangement schematically shown in FIG. 8 to obtain two types of mat materials (a first mat material and a second mat material).

In the first mat material, the orientation direction of the longitudinally oriented fibers of the sheet material is parallel to the long-side direction of the mat material. In the second mat material, the orientation direction of the transversely oriented fibers of the sheet material is parallel to the long-side direction of the mat material.

### (Comparative Example 1)

A large base mat was produced as in Examples 1 and 2.

To provide a large sheet material, a polyolefin film stretched in the machine direction was split to obtain a longitudinal web with a longitudinal fiber orientation, a polyolefin film stretched in the cross direction was split to obtain a transverse web with a transverse fiber orientation, and the longitudinal web and the transverse web were stacked and heat-fused.

The base mat and the sheet material were thermocompression bonded to each other without using an adhesive such as a hot melt powder. In other words, the sheet material was heat-fused to the base mat. As a result, a rectangular laminated body having two vertical sides and two horizontal sides was obtained.

The laminated body was subjected to punching as in Examples 1 and 2 to obtain two types of mat materials (a first mat material and a second mat material).

In the first mat material, the orientation direction (longitudinal direction) of the longitudinal web of the sheet material is parallel to the long-side direction of the mat material. In the second mat material, the orientation direction (transverse direction) of the transverse web of the sheet material is parallel to the long-side direction of the mat material.

### (Occurrence of cracking in mat material)

Each of the two types of mat materials (the first mat material and the second mat material) produced in each of Examples and Comparative Example was wrapped around a ϕ200-mm cylindrical base body.

Each mat material was wrapped such that the base mat was facing the base body and the sheet material was facing the outside.

The occurrence of cracking in each mat material after wrapping was checked.

Table 1 shows the results.

In "Presence or absence of cracking", ∘ indicates no occurrence of cracking, and × indicates occurrence of cracking.

**[Table 1]**

| | Sheet material (non-woven fabric) | | Sheet material + Base mat Presence or absence of cracking |
|---|---|---|---|
| | Laminated fibers | Attatchment method | |
| Example 1 | Longitudinally oriented fibers & Tansversely oriented fibers | Hot melt powder | ○ (No cracking occured) |
| Example 2 | Fiber bundles & Single fibers | Hot melt powder | ○ (No cracking occured) |
| Comparative Example 1 | Longitudinally oriented fibers & Tansversely oriented fibers | Heat fusion | × (Cracking occured)) |

The results show that cracking in the mat material at the time of wrapping can be prevented by forming a network on the surface(s) of the base mat, the network containing multiple bases made of an organic substance and fibers stretching in at least two directions from each of the multiple bases.

The results also show that cracking in the mat material at the time of wrapping can be prevented by forming a web on the surface(s) of the base mat, the web containing fiber bundles each formed from multiple fibers entangled together and single fibers.

FIG. 10 is a photo of the mat material of Comparative Example 1.

As shown in FIG. 10, in the mat material of Comparative Example 1, cracking occurred after wrapping in a portion surrounded by a dotted line.

In addition, in the mat material of Comparative Example 1, the fibers of the sheet material after thermocompression bonding had small holes and multiple fibers were fused to each other. Presumably, this reduced the flexibility of the sheet material, causing cracking after wrapping.

### REFERENCE SIGNS LIST

1, 201 first mat material
2, 202 second mat material
10, 210 mat material
11, 211 projection
12, 212 recess
20, 120, 220, 320 base mat
21, 121, 221, 321 first main surface of base mat
22, 222 second main surface of base mat
130, 330 sheet material
31, 231 longitudinally oriented fiber
32, 232 transversely oriented fiber
40 exhaust gas treatment body
41 cell
42 cell wall
43 plug
50 casing
60 holding sealing material
70 network
71, 273 base
72 fiber
100 exhaust gas conversion apparatus
150, 350 laminated body
270 web
271 fiber bundle
271a longitudinally oriented fiber bundle
271b transversely oriented fiber bundle
271c curved fiber bundle
272 single fiber
272a longitudinally oriented single fiber
272b transversely oriented single fiber
272c curved single fiber

## Claims

1. A mat material comprising:
a base mat containing inorganic fibers and including a first main surface and a second main surface; and
a network on at least one of the first or second main surface, the network containing multiple bases made of an organic substance and fibers stretching in at least two directions from each of the multiple bases.

2. The mat material according to claim 1,
wherein a maximum width of each of the multiple bases is greater than a width of each of the fibers forming the network.

3. The mat material according to claim 1 or 2,
wherein the fibers forming the network have a glass transition temperature higher than a glass transition temperature of the organic substance constituting the multiple bases.

4. The mat material according to any one of claims 1 to 3,
wherein the network is three-dimensionally formed.

5. The mat material according to any one of claims 1 to 4,
wherein the fibers forming the network include at least one of organic or inorganic fibers.

6. A mat material comprising:
a base mat containing inorganic fibers and including a first main surface and a second main surface; and
a web on at least one of the first or second main surface, the web containing fiber bundles each formed from multiple fibers entangled together and single fibers.

7. The mat material according to claim 6,
wherein the fiber bundles include multiple fiber bundles stretching in different stretching directions, and
the web contains the multiple fiber bundles and the single fibers.

8. The mat material according to claim 6 or 7,
wherein at least one of the fiber bundles or the single fibers is curved.

9. The mat material according to any one of claims 6 to 8,
wherein the web is three-dimensionally formed.

10. The mat material according to any one of claims 6 to 9,
wherein the fiber bundle includes at least one of organic or inorganic fibers, and the single fibers include at least one of organic or inorganic fibers.

11. An exhaust gas conversion apparatus comprising:
an exhaust gas treatment body through which exhaust gas passes;
a holding sealing material that is used by being wrapped around an outer periphery of the exhaust gas treatment body; and
a casing for housing the exhaust gas treatment body with the holding sealing material wrapped therearound,
wherein the holding sealing material is the mat material according to any one of claims 1 to 10.

12. A method for producing a mat material, the method comprising:
a base mat preparing step of preparing a base mat containing inorganic fibers and including a first main surface and a second main surface;
a sheet material preparing step of preparing a sheet material containing fibers stretching in at least two directions;
a sheet material processing step of spraying a hot melt powder onto the sheet material and heating to allow the hot melt powder to adhere to the sheet material; and
a sheet material attaching step of thermocompression bonding the sheet material with the hot melt powder adhered thereto to at least one of the first or second main surface of the base mat so as to attach the sheet material to the base mat.
